# EUROPEAN PATENT SPECIFICATION

(11) **EP 3 618 250 B1**
(45) Date of publication and mention of the grant of the patent: **17.02.2021**
(21) Application number: 18191477.1
(22) Date of filing: 29.08.2018
(51) Int. Cl.: H02M 1/36, H02M 1/42, H02M 1/08, G05F 1/70, H02M 1/32, H02M 3/156, H02H 9/00

(54) **INRUSH CURRENT LIMITING DEVICE AND POWER FACTOR CORRECTION CIRCUIT**
EINSCHALTSTROMBEGRENZUNGSVORRICHTUNG UND LEISTUNGSFAKTORKORREKTURSCHALTUNG
DISPOSITIF DE LIMITATION DE COURANT D'APPEL ET CIRCUIT DE CORRECTION DE FACTEUR DE PUISSANCE

(43) Date of publication of application: 04.03.2020
(73) Proprietor: FRIWO Gerätebau GmbH, 48346 Ostbevern (DE)
(72) Inventor: WISSING, Daniel, 48268 Greven (DE)
(74) Representative: Grünecker Patent- und Rechtsanwälte PartG mbB

(56) References cited:
- EP-A1- 0 748 035
- JP-A- H09 204 230
- US-A- 4 631 470
- US-A1- 2004 085 052
- US-A1- 2015 277 457
- US-B1- 6 356 468
- US-B1- 7 098 633
- US-B2- 7 965 484

## Description

The present invention relates to an inrush current limiting device and to a power factor correction circuit comprising an inrush current limiter. In particular, the present invention relates to a power factor correction circuit for controlling an inrush current limiter in a power conversion system used as a power supply.

Power supplies connected to an AC line voltage supply are often subjected to short-duration, high amplitude input current (known as inrush current). Generally, high inrush currents occur when many items of electrical equipment such as switched mode power supplies, motors, transformers and amplifiers are turned on. These currents can damage individual components or entire subassemblies and blow fuses in error. Such high currents are caused by the extremely low impedance of smoothing capacitors or coils which almost produce short circuits at the moment of switching on.

The inrush current may be many times the steady-state current until the power supply reaches equilibrium, i. e. the transient effect continues until the voltage across the internal power supply capacitance reaches a voltage approximately equal to the peak amplitude of the AC line voltage supply. If uncontrolled, the inrush current can result in the internal power supply capacitance absorbing energy beyond its rated value as well as subjecting power supply components to damaging current levels. Furthermore, these inrush currents can also cause interferences to the equipment and apparatus connected to the power supply.

It is known by those skilled in the art that inrush current can be reduced, i. e. limited, when the supply is switched on by introducing a resistive element or defiance in one or more of the supply lines between the input lines and an output capacitor off the power supply. Therefore, by limiting the inrush current the input components avoid being overstressed and any interference is reduced. It is further known that resistors or NTC thermistors, for example, can be used to limit inrush current.

Furthermore, it is known to those skilled in the art of power conversion that market interests, which are driven by legislation and/or formal standards, have over recent years been directed to power factor correction (PFC). The power factor (PF) is defined as PF = R/S, where R is the real power and S is the total apparent power. PFC is used as a means for pre-regulating the input power, while at the same time boosting the output DC voltage, such that it has an improved PF before the power is converted by a power converter.

US 4 631470 A relates to a power supply with surge current limitation. The inrush current-limited power supply contains a controller, to whose input terminals a capacitor is connected. If the voltage to be controlled is suddenly applied to the input terminals of the controller by a switch, an undesirable large current surge will occur when the capacitor is charging. The strength of the surge is limited by a surge limiting resistor connected in series with the switch.

US 7 965 484 B2 relates to a speed controller comprising a rectifier module for generating a direct voltage on a power bus from an alternating voltage available on an electrical power-supply network; a bus capacitor connected between a positive line and a negative line of the power bus; and an inverter module powered by the power bus and controlled to deliver an alternating voltage to an electrical load; a protection device for protecting the controller against overcurrents linked with voltage variations on the electrical power-supply network.

However, known inrush current limiters have high losses during normal operation off the power supply and, furthermore, may negatively influence any surge tests. In order to avoid such losses, it is known to use a relay for bypassing the inrush current limit during normal operation. Such relays, however need a lot of board space, are expensive, and requires a relatively high switching power. This enhances the open circuit losses.

The object underlying the present invention is to provide an effective inrush current limiting device and a power factor correction circuit which alleviate or overcome the above disadvantages and provide a significant reduction of manufacturing costs and the complexity.

This object is solved by the subject matter of the independent claim 1. Advantageous embodiments of the present invention are the subject matter of the dependent claims.

The present invention is based on the idea that using a bridging device based on a semiconductor switch allows dispensing with a relay. According to the present invention, the semiconductor switch is controlled by a charge pump circuit. Thus, the circuitry can be fabricated much smaller and may also be realized in surface mount device (SMD) assembly technique. Because no relay is used, no audible clicking or other sounds occur. The no-load energy losses are reduced compared to circuits where the inrush current limited is bridge by a relay. Finally, the losses off the power supply in normal operation are reduced.

In particular, an inrush current limiting device for limiting inrushing current to a connectable load comprises a first node and a second node, a resistive limiter unit for limiting current flowing through said limiter unit from said first to said second node, and a controllable bridging device which is connected between said first and said second nodes in parallel to the limiter unit. according to the present invention, the bridging device comprises a semiconductor switch and a charge pump circuit connected to a control terminal of the semiconductor switch for controlling the semiconductor switch.

According to an advantageous embodiment of the present invention, the limiter unit comprises a resistor with negative temperature coefficient (NTC).

NTC thermistors acting as inrush current limiters limit the current without elaborate circuitry at low cost. Advantageously, the resistance of negative temperature coefficient (NTC) thermistors falls as their temperature rises. In the cold state, i.e. at room temperature, the high initial resistance of the inrush current limiter effectively absorbs the power of peak inrush currents. As a result of the current load and subsequent heating, the resistance of the inrush current limiter then drops by a factor >30 - 50 to a few percent of its value at room temperature. The power consumption of the inrush current limiters is thus very low in continuous operation - an outstanding advantage of NTC thermistors over fixed resistors.

After a load has been switched off, the NTC thermistor must be allowed to cool down to room temperature if its capacity for inrush current limiting is to be fully used. This can take from 30 seconds to two minutes depending on the disk size. In the case of switched mode power supplies, these cooling times are often a minor consideration because electrolytic capacitors in the circuit usually take longer to discharge fully. The NTC thermistor will therefore be cool enough to resume operation in the event of another short-term turn-on.

NTC thermistors are usually made from various metal oxides that are combined into a powdery mass and mixed with a plastic binding agent. In the production of inrush current limiters, the mass is pressed into disks under high pressure. Polycrystalline NTC thermistor bodies are formed by subsequent sintering of these blanks at temperatures between 1000 and 1400 °C. A silver paste is baked onto them as metallization on both sides. The disks are then leaded and sealed in varnish. It is, however, clear for a person skilled in the art that any other assembly technique and realization may also be employed for providing a resistive limiter unit according to the present invention.

According to an advantageous embodiment, said semiconductor switch is a bypass transistor which comprises a power MOSFET, wherein a drain terminal of the MOSFET is connected to the first node, a source terminal of the MOSFET is connected to the second node, and a gate terminal of the MOSFET forming said control terminal is connected to said charge pump circuit. In particular, a power MOSFET with a rating of 500 V to 1000 V can be used. Advantageously, the resistance in the conductive state is very low, for instance, Rds_on may be below 600 mQ.

According to a further advantageous embodiment, said charge pump circuit comprises a charge pump capacitor, which is connected with a first end via a first diode to an auxiliary voltage, and is further connected with said first end to the gate terminal of the bypass transistor. A low component expense and complexity can be achieved when using a supply voltage that is already present in the circuitry. The auxiliary voltage may for instance be a positive supply voltage Vcc of an integrated circuit comprising the inrush current limiting device. The auxiliary voltage does not have to be extremely precise in its value and may for instance be between 10 V and 20 V.

In order to ensure that the semiconductor switch remains constantly on when the bridging function is required, a low pass filter is arranged between said second node and said gate terminal.

Furthermore, a current limiting resistor may be arranged between said gate terminal and said charge pump circuit in order to limit the current through the charge pump circuit.

According to a further advantageous embodiment of the present invention, a Zener diode is connected between said gate terminal and said second node for protecting the semiconductor switch.

The present invention further relates to an active power factor correction (PFC) circuit comprising an input terminal which is connectable to a power source, an output terminal which is connectable to a load, a PFC choke connected to said input terminal, a PFC diode connected in series with said PFC choke, an inrush diode connected in parallel to the series connection of the PFC choke and the PFC diode, and a PFC switch connected between said PFC choke and a reference potential to form a boost converter, and an inrush current limiting device, which is connected between said PFC diode and the output terminal.

As mentioned above, PFC is a technique of increasing the power factor of a power supply. Switching power supplies without power factor correction draw current in short, high-magnitude pulses. These pulses can be smoothed out by using active or passive techniques. This reduces the input RMS current and apparent input power, thereby increasing the power factor.

The power factor correction shapes the input current in order to maximize the real power from the AC supply. Ideally, electrical equipment should present a load that emulates a pure resistor, meaning that the reactive power would be zero. And the current and voltage waveforms would be the same sine wave and in phase with one another. However, due to the reactive components in a majority of circuits, there is always a power lag that leads to lower power factors.

In an ideal system, all the power drawn from the AC mains is utilized in doing useful work. This is only possible when the current is in phase with the voltage. When the phase between the two varies, some of the energy from the AC outlet does not perform useful work and is lost.

Power factor correction tries to push the power factor of the electrical system such as the power supply towards 1, and even though it does not reach this it gets to as close as 0.95 which is acceptable for most applications. There are two common types of power factor correction for power supplies; the passive PFC and the active PFC. The passive PFCs are simple, robust and reliable for lower power requirements. In addition, they do not generate EMI. However, they are big and heavy due to the inductor. The active PFC methods are preferred for power supplies of over 100W. This method provides a more efficient correction, is lighter and less bulky.

A basic active PFC circuit consists of a control circuit that measures the input voltage and current and then adjusts the switching time and duty cycle to ensure that the input voltage and current are in phase. This provides an automatic correction of the input AC voltage, resulting to a theoretical power factor of over 0.95. Unlike the passive PFC, the active PFC operates over a wide range of input voltages. However, it requires extra components, which makes it more complex and expensive.

In summary, with a power factor equal to 1 or as close as possible, there are lower losses and all power generated is utilized efficiently.

The technical benefits are improved efficiency and reduction in power demand, hence a reduction in the load on the switching gear and cables, reduced costs to the consumer and support for more load.

According to the present invention, the inrush current limiting device comprises a first node and a second node, a resistive limiter unit for limiting current flowing through said limiter unit from said first to said second node, and a controllable bridging device which is connected between said first and said second nodes in parallel to the limiter unit, wherein the bridging device comprises a semiconductor switch, preferably a bypass transistor, and a charge pump circuit connected to a gate terminal of the semiconductor switch for controlling the semiconductor switch.

Advantageously, the limiter unit comprises a resistor with negative temperature coefficient (NTC).

According to another advantageous embodiment, the charge pump is connected between the PFC switch and the PFC choke, and is connected to the bridging device for providing a boosted control voltage.

Further, the power factor correction circuit may comprise a bulk capacitor connected in series with said limiter unit. This capacitor causes inrush currents when being charged. Hence, the bridging semiconductor switch needs to block the bypass path while the bulk capacitor is charged.

According to an advantageous embodiment of the present invention, said charge pump is operable to provide a boosted control voltage that equals to a sum of a voltage across said bulk capacitor and a voltage across said PFC switch. Thus, in a particularly effective manner, the resistive limiter unit can be bypassed when the PFC stage is active. When the PFC stage is inactive, the bypass is removed.

According to an advantageous embodiment, said semiconductor switch is a bypass transistor which comprises a power MOSFET, wherein a drain terminal of the MOSFET is connected to the first node, a source terminal of the MOSFET is connected to the second node, and a gate terminal of the MOSFET forming the control terminal is connected to said charge pump circuit. However, it is apparent to a person skilled in the art that other suitable semiconductor switches, for instance an SiC MOSFET or a thyristor, may also be used.

Advantageously, said charge pump circuit may comprise a charge pump capacitor, which is connected with a first end via a first diode to an auxiliary voltage, and is further connected with said first end to the gate terminal of the bypass transistor. As mentioned above, the auxiliary voltage may be a positive supply voltage Vcc of an integrated circuit comprising the inrush current limiting device. The auxiliary voltage does not have to be extremely precise in its value and may for instance be between 10 V and 20 V. The charge pump capacitor may for instance have capacitance values of around 10 nF.

As mentioned above, a low pass filter may be arranged between said second node and said gate terminal, and/or a Zener diode may be connected between said gate terminal and said second node, and/or a current limiting resistor may be arranged between said gate terminal and said charge pump circuit.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic representation of a power factor correction circuit according to the present invention;
- **FIG. 2**: is a block diagram of an inrush limiting device according to the present invention;
- **FIG. 3**: is a schematic circuit diagram of an exemplary power factor correction circuit according to the present invention.

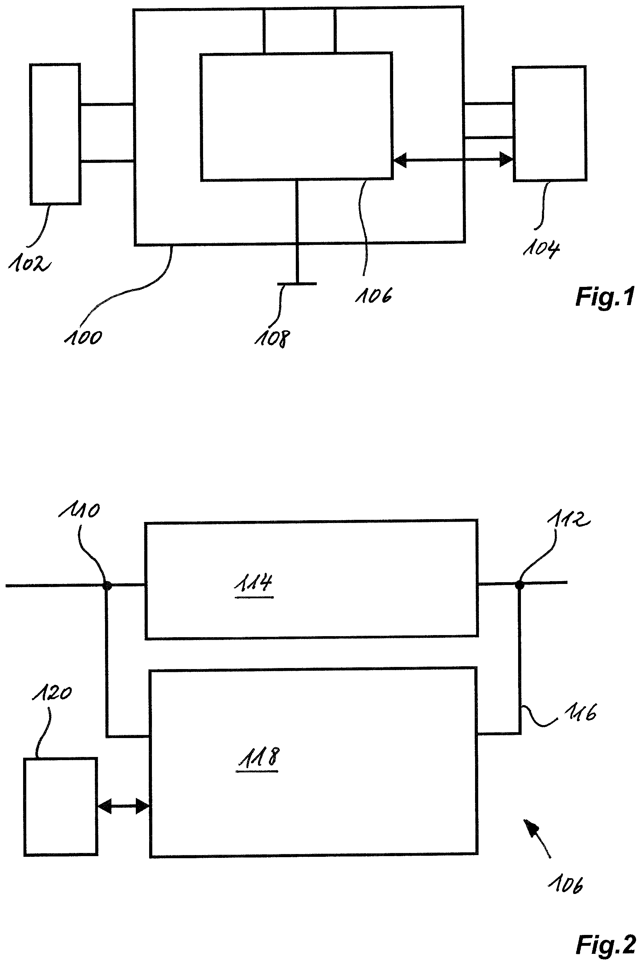

The present invention will now be explained in more detail with reference to the Figures and firstly referring to Fig. 1. Figure 1 shows a block diagram of a power factor correction (PFC) circuit 100 according to the present invention.

The PFC circuit 100 is connected between a power source 102, such as a common AC source, and a load 104. The load 104 may for instance comprise a lamp, but may of course be any other load. The PFC circuit 100 comprises an inrush current limiting device 106. The inrush current limiting device 106 is connected to ground 108 and is also connected to the load 104. As this is known to a person skilled in the art, the PFC circuit 100 performs a power factor correction and, furthermore, the inrush current limiting device 106 avoids detrimental current surges affecting the load 104.

Fig. 2 shows the inrush current limiting device 106 according to the present invention in more detail. The inrush current limiting device 106 comprises a first node 110 and a second node 112. For limiting surge currents, a resistive limiter unit 114 is connected between the first node 110 and the second node 112. The resistive limiter unit 114 may for instance be formed by an NTC thermistor. As already mentioned above, the resistance of negative temperature coefficient (NTC) thermistors falls as their temperature rises. In the cold state, the high initial resistance of the inrush current limiter unit 114 effectively absorbs the power of peak inrush currents between the first node 110 and the second node 112. As a result of the current load and the subsequent heating, the resistance of the limiter unit 114 then drops by a factor >30 - 50 to a few percent of its value at room temperature. However, the resistive limiter unit 114 still represents a significant resistance between the first node 110 and the second node 112.

In order to reduce this resistance between the first node 110 and the second node 112 during normal operation still further, the present invention provides a bypass path 116 through a controllable bridging device 118, which is connected between the first and second nodes 110, 112 in parallel to the resistive limiter unit 114.

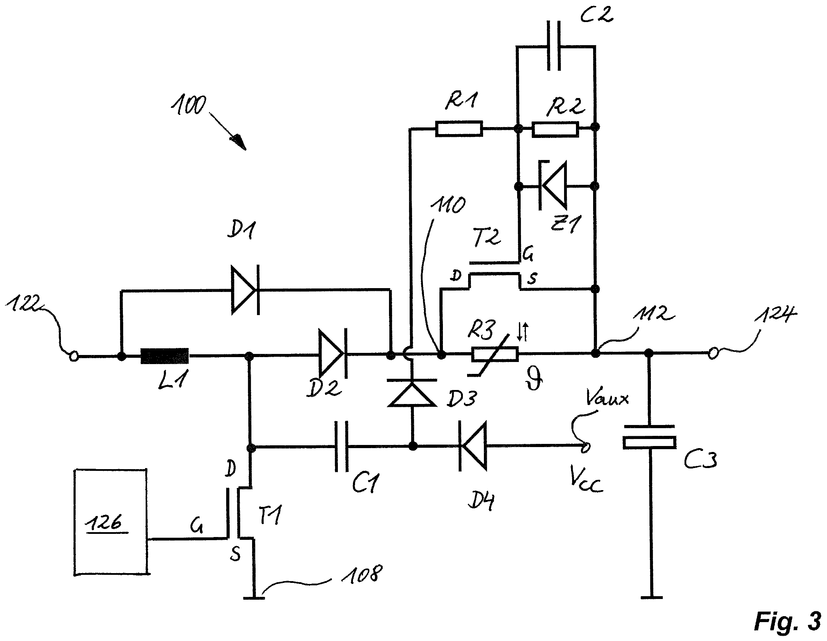

According to the present invention, the bridging device 118 comprises a semiconductor switch, which is controlled by a control unit 120. As will become more apparent from Fig. 3, the control unit comprises a charge pump circuit that generates a control of voltage for switching the semiconductor switch.

Advantageously, the bridging device 118 therefore does not need a relay for bridging the resistive limiter unit 114. Consequently, the inrush current limiting device 106 is much smaller than conventional inrush current limiting devices and may even be formed as an SMD component. Moreover, the costs are reduced and no audible sounds, such as clicking or the like occur. The open circuit losses are not deteriorated and the losses during normal operation can be reduced significantly.

Fig. 3 shows a schematic circuit diagram of a PFC circuit 100 according to an exemplary embodiment of the present invention.

The PFC circuit 100 is a circuit that increases the power factor (PF) by using an electronic circuit with feedback that controls the shape of the drawn current. At an input terminal 122, an input voltage, usually an AC voltage that has passed a rectifying unit, is fed into the PFC circuit 100. At an output terminal 124, the load 104 may be connected. A large filter capacitor C3 is placed between the output terminal 124 and ground for providing a DC voltage to the load.

As this is known to a person skilled in the art, without additional circuitry, once the capacitor C3 is charged to nearly the peak of the rectified input voltage, the power supply would draw power from the line in short pulses only when the instantaneous input voltage exceeds the voltage across the bulk capacitor C3. This produces harmonics whose level can exceed an applicable standard and adversely affect other uses. In order to consume continuous sine-like current over the entire AC cycle, an inductance, a PFC choke L1, is provided. Furthermore, a transistor, for instance a field effect transistor, T1 is provided for controlling the current flow through the PFC choke L1. The PFC switch T1 is controlled by a PFC switch control unit 126 at a frequency much higher than the mains frequency, for instance at frequencies between 30 kHz and 150 kHz.

During an on-time of the PFC transistor T1, the current in the inductor L1 therefore increases. When the switch T1 opens, the voltage across the inductor L1 reverses and it is releasing all or portion of accumulated energy via the diode D2. During the off-time of the switch T1, the inductor current decreases. The net current change during one period depends on the duty cycle of the switch. Hence, the control unit 126 controls the current drawn from the input terminal 122.

Furthermore, an inrush diode D1 is connected in parallel to the PFC choke L1 and the PFC diode D2. For dealing with inrush currents flowing while the bulk capacitor C3 is charged, a resistive limiter unit R3, in particular an NTC thermistor, is provided.

According to the present invention, the NTC thermistor R3 is bridged by a bypass transistor T2. In other words, when the transistor T2 is switched on, the electrical connection between the first node 110 and the second node 112 is provided by the drain-source channel of the transistor T2 instead of the path via the NTC thermistor R3. The bridging transistor T2 may for instance be a power MOSFET having a very low conduction resistance Rdson of less than 600 mΩ, e. g. 30 mΩ. Consequently, much lower losses occur during operation when the inrush current handling by the NTC thermistor R3 is not needed.

For controlling the bridging transistor T2, a charge pump comprising a charge pump capacitor C1 and a charge pump diode D3 is connected between the gate terminal of the transistor T2 and the drain terminal of the PFC transistor T1. The charge pump transistor C1 may for instance have a capacitance of 10 nF. The first end of the charge pump transistor C1 is connected to a drain terminal of the PFC switch T1. The second end of the charge pump capacitor C1 is connected via a further diode D4 to an auxiliary voltage Vaux, which may for instance be a positive supply voltage Vcc. The auxiliary voltage Vaux may be any suitable voltage and should have a value between 10 V and 20 V. Advantageously, a supply voltage is used which is present in the integrated circuitry anyway.

By means of this charge pump, a control voltage is generated, which is higher than the bulk voltage at the PFC capacitor C3 by the value of the auxiliary voltage. The control voltage is used to switch the bridging transistor T2, so that the bridging transistor T2 is switched on when the PFC stage is active. Thus, the NTC thermistor is bypassed when the PFC stage is active. On the other hand, the bridging transistor T2 is switched off when the PFC stage is inactive, thereby deactivating the bypassing.

Furthermore, an optional low pass filterformed by a parallel connection of a low pass filter resistor R2 and a low pass filter capacitor C2 is provided between the charge pump and the gate terminal of the bridging transistor T2. Thereby, it can be ensured that the bridging transistor T2 is constantly switched on if the PFC stage is active. The low pass filter resistor R2 may for instance have a resistance of 1 MΩ, and the lower pass filter capacitor C2 may have a capacitance of 1 µF.

For limiting the current through the diode D3, an optional current limiting resistor R1 (having for instance a resistance of 1 kΩ) is arranged between the diode D3 and the gate terminal of the bridging transistor T2. The diodes D3 and D4 should have a rated peak reverse voltage of 600 V.

Moreover, an optional Zener diode Z1 may be provided between the gate terminal of the bridging transistor T2 and the source terminal of the bridging transistor T2 for protecting the transistor T2. The Zener diode Z1 may for instance have a Zener voltage of 20 V.

The PFC circuit 100 according to the present invention therefore only uses simple electric components for achieving an effective reduction of losses during no-load status as well as during regular operation.

It has to be noted that any values or specific characteristics of the described electric and electronic components are only intended as examples and may of course be varied as necessary in order to adapt the circuitry to the particular needs of a specific application environment. Furthermore, although the embodiments have been described in relation to particular examples, the invention is not limited and numerous alterations to the disclosed embodiments can be made without departing from the scope of this invention. The various embodiments and examples are thus not intended to be limited to the particular forms disclosed. Rather, they include modifications and alternatives falling within the scope of the claims and individual features can be freely combined with each other to obtain further embodiments or examples according to the invention.

**REFERENCE NUMERALS**

| **Reference Numeral** | **Description** |
|---|---|
| 100 | Power factor correction (PFC) circuit |
| 102 | Power source |
| 104 | Load |
| 106 | Inrush current limiting device |
| 108 | Ground |
| 110 | First node |
| 112 | Second node |
| 114 | Limiter unit, NTC thermistor |
| 116 | Bypass path |
| 118 | Bridging device |
| 120 | Control unit |
| 122 | Input terminal |
| 124 | Output terminal |
| 126 | PFC switch control unit |
| C1 | Charge pump capacitor 10 nF |
| C2 | Low pass filter capacitor 1 µF |
| C3 | Bulk capacitor |
| D1 | Inrush diode |
| D2 | PFC diode |
| D3 | Blocking diode 600 V |
| D4 | Blocking diode 600 V |
| L1 | PFC choke |
| R1 | Current limiting resistor 10 kΩ |
| R2 | Low pass filter resistor 1 MΩ |
| R3 | NTC thermistor |
| T1 | PFC FET |
| T2 | Bypass transistor, power MOSFET |
| Z1 | Zener diode 20 V |

## Claims

1. Power factor correction, PFC, circuit comprising:
an input terminal (122) which is connectable to a power source (102),
an output terminal (124) which is connectable to a load (104),
a PFC choke (L1) connected to said input terminal (122), a PFC diode (D2) connected in series with said PFC choke (L1), an inrush diode (D1) connected in parallel to the series connection of the PFC choke and the PFC diode, and a PFC switch (T1) connected between said PFC choke and a reference potential (108) to form a boost converter,
a bulk filter PFC capacitor (C3) connected between the output terminal and the reference potential and configured to provide a DC voltage to the load, and Z an inrush current limiting device (106), which is connected between said PFC diode (D2) and the output terminal (124),
wherein said inrush current limiting device (106) comprises a first node (110) and a second node (112), a resistive limiter unit (114, R3) with a resistor (R3) with negative temperature coefficient, NTC, for limiting current flowing through said limiter unit from said first to said second node, and a controllable bridging device (118) which is connected between said first and said second nodes (110, 112) in parallel to the limiter unit (114, R3), wherein the bridging device (118) comprises a semiconductor switch (T2) and a charge pump circuit (C1, D3, D4) connected to a control terminal of the semiconductor switch (T2) for controlling the semiconductor switch, the semiconductor switch (T2) being a transistor with a gate terminal forming the control terminal, and
wherein the charge pump (C1, D3, D4) is connected between the PFC switch (T1) and the PFC choke (L1), and is further connected to the bridging device (118) and configured to provide a boosted control voltage that equals to a sum of a voltage across said bulk capacitor (C3) and a voltage across said PFC switch (T1), said charge pump circuit comprising a charge pump capacitor (C1), which is connected with a first end via a first diode (D4) to an auxiliary voltage (Vaux), and is further connected with said first end to the gate terminal of the bypass transistor (T2),
wherein the charge pump is configured to generate a control voltage, which is higher than the bulk voltage at the PFC capacitor (C3) by the value of the auxiliary voltage (Vaux),
the control voltage being used to switch the bridging transistor (T2) on, when the PFC stage is active, so that the resistive limiter unit is bypassed when the PFC circuit is active, and
to switch the bridging transistor (T2) off, when the PFC circuit is inactive, thereby deactivating the bypassing.

2. Power factor correction circuit according to claim 1, further comprising a bulk capacitor (C3) connected in series with said limiter unit (R3).

3. Power factor correction circuit according to one of the claims 1 or 2, wherein said semiconductor switch (T2) is a bypass transistor which comprises a power MOSFET, wherein
a drain terminal of the MOSFET is connected to the first node (110),
a source terminal of the
MOSFET is connected to the second node (112),
and a gate terminal of the MOSFET forming said
control terminal is connected to said charge pump circuit (C1, D3, D4).

4. Power factor correction circuit according to one of the claims 1 to 3, wherein a low pass filter (C2, R2) is arranged between said second node (112) and said gate terminal, and/or wherein a Zener diode (Z1) is connected between said gate terminal and said second node (112), and/or wherein a current limiting resistor (R1) is arranged between said gate terminal and said charge pump circuit (C1, D3, D4).

## Patentansprüche

1. PFC-Schaltung (power factor correction circuit), die umfasst:
einen Eingangsanschluss (122), der mit einer Stromquelle (102) verbunden werden kann,
einen Ausgangsanschluss (124), der mit einer Last (104) verbunden werden kann,
eine PFC-Drossel (L1), die mit dem Eingangsanschluss (122) verbunden ist, eine PFC-Diode (D2), die in Reihe mit der PFC-Drossel (L1) verbunden ist, eine Einschalt-Diode (inrush diode) (D1), die parallel zu der Reihenschaltung aus der PFC-Drossel und der PFC-Diode geschaltet ist, sowie einen PFC-Schalter (T1), der zwischen die PFC-Drossel und ein Bezugspotential (108) geschaltet ist, so dass ein Aufwärtswandler gebildet wird, einen Bulk-Filter-PFC-Kondensator (C3), der zwischen den Ausgangsanschluss und das Bezugspotential geschaltet und so ausgeführt ist, dass er der Last eine Gleichspannung bereitstellt, sowie
eine Einschaltstrombegrenzungs-Vorrichtung (106), die zwischen die PFC-Diode (D2) und den Ausgangsanschluss (124) geschaltet ist,
wobei die Einschaltstrombegrenzungs-Vorrichtung (106) einen ersten Knoten (110) und einen zweiten Knoten (112), eine widerstandsbehaftete Begrenzer-Einheit (114, R3) mit einem Widerstand (R3) mit negativem Temperaturkoeffizienten (NTC) zum Begrenzen von durch die Begrenzungs-Einheit von dem ersten zu dem zweiten Knoten fließendem Strom sowie eine steuerbare Überbrückungsvorrichtung (118) umfasst, die parallel zu der Begrenzer-Einheit (114, R3) zwischen den ersten und den zweiten Knoten (110, 112) geschaltet ist, wobei die Überbrückungsvorrichtung (118) einen Halbleiterschalter (T2) sowie eine Ladungspumpen-Schaltung (C1, D3, D4) umfasst, die mit einem Steueranschluss des Halbleiterschalters (T2) verbunden ist, um den Halbleiterschalter zu steuern, wobei der Halbleiterschalter (T2) ein Transistor mit einem Gate-Anschluss ist, der den Steueranschluss bildet, und
die Ladungspumpe (C1, D3, D4) zwischen den PFC-Schalter (T1) und die PFC-Drossel (L1) geschaltet ist und des Weiteren mit der Überbrückungsvorrichtung (118) verbunden und so ausgeführt ist, dass sie eine verstärkte Steuerspannung bereitstellt, die genauso groß ist wie eine Summe einer Spannung über den Bulk-Kondensator (C3) und einer Spannung über den PFC-Schalter (T1), wobei die Ladungspumpen-Schaltung einen Ladungspumpen-Kondensator (C1) umfasst, der mit einem ersten Ende über eine erste Diode (D4) mit einer Hilfsspannung (Vaux) verbunden ist und des Weiteren mit diesem ersten Ende mit dem Gate-Anschluss des Bypass-Transistors (T2) verbunden ist, wobei die Ladungspumpe so ausgeführt ist, dass sie eine Steuerspannung erzeugt, die um den Wert der Hilfsspannung (Vaux) höher ist als die Bulk-Spannung an dem PFC-Kondensator (C3),
die Steuerspannung verwendet wird, um den Überbrückungs-Transistor (T2) einzuschalten, wenn die PFC-Stufe aktiv ist, so dass die widerstandsbehaftete Begrenzer-Einheit überbrückt wird, wenn die PFC-Schaltung aktiv ist, und um den Überbrückungstransistor (T2) auszuschalten, wenn die PFC-Schaltung inaktiv ist, wodurch die Überbrückung deaktiviert wird.

2. PFC-Schaltung nach Anspruch 1, die des Weiteren einen Bulk-Kondensator (C3) umfasst, der in Reihe mit der Begrenzer-Einheit (R3) verbunden ist.

3. PFC-Schaltung nach einem der Ansprüche 1 oder 2, wobei der Halbleiterschalter (T2) ein Bypass-Transistor ist, der einen Leistungs-MOSFET umfasst, ein Drain-Anschluss des MOSFET mit dem ersten Knoten (110) verbunden ist, ein Source-Anschluss des MOSFET mit dem zweiten Knoten (112) verbunden ist und ein Gate-Anschluss des MOSFET, der den Steueranschluss bildet, mit der Ladungspumpen-Schaltung (C1, D3, D4) verbunden ist.

4. PFC-Schaltung nach einem der Ansprüche 1 bis 3, wobei ein Tiefpassfilter (C2, R2) zwischen dem zweiten Knoten (112) und dem Gate-Anschluss angeordnet ist, und/oder wobei eine Zener-Diode (Z1) zwischen den Gate-Anschluss und den zweiten Knoten (112) geschaltet ist, und/oder wobei ein Strombegrenzungs-Widerstand (R1) zwischen dem Gate-Anschluss und der Ladungspumpen-Schaltung (C1, D3, D4) angeordnet ist.

## Revendications

1. Circuit de correction de facteur de puissance PFC, soit Power Factor Correction, comprenant :
une borne d'entrée (122) qui est connectable à une source d'alimentation (102),
une borne de sortie (124) qui est connectable à une charge (104),
une bobine d'arrêt PFC (L1) connectée à ladite borne d'entrée (122), une diode PFC (D2) connectée en série à ladite bobine d'arrêt PFC (L1), une diode de démarrage (D1) connectée en parallèle à la connexion en série de la bobine d'arrêt PFC et de la diode PFC, et un interrupteur PFC (T1) connecté entre ladite bobine d'arrêt PFC et un potentiel de référence (108) pour former un convertisseur élévateur,
un condensateur PFC à filtre de masse (C3) connecté entre la borne de sortie et le potentiel de référence et configuré pour fournir une tension CC à la charge, et
un dispositif de limitation de courant de démarrage (106), qui est connecté entre ladite diode PFC (D2) et la borne de sortie (124),
dans lequel ledit dispositif de limitation de courant de démarrage (106) comprend un premier nœud (110) et un deuxième nœud (112), une unité de limiteur résistif (114, R3) avec une résistance (R3) à coefficient thermique négatif NTC, soit Negative Temperature Coefficient, pour limiter le courant qui traverse ladite unité de limiteur dudit premier nœud audit deuxième nœud, et un dispositif de pontage contrôlable (118) qui est connecté entre lesdits premier et deuxième nœuds (110, 112) en parallèle à l'unité de limiteur (114, R3), dans lequel le dispositif de pontage (118) comprend un interrupteur semi-conducteur (T2) et un circuit de convertisseur à pompe de charge (C1, D3, D4) connecté à une borne de commande de l'interrupteur semi-conducteur (T2) pour commander l'interrupteur semi-conducteur, l'interrupteur semi-conducteur (T2) étant un transistor avec une borne de grille formant la borne de commande, et
dans lequel le convertisseur à pompe de charge (C1, D3, D4) est connecté entre l'interrupteur PFC (T1) et la bobine d'arrêt PFC (L1), et est en outre connecté au dispositif de pontage (118) et configuré pour fournir une tension de commande relevée égale à la somme de la tension sur ledit condensateur de masse (C3) et de la tension sur ledit interrupteur PFC (T1), ledit circuit de convertisseur à pompe de charge comprenant un condensateur de convertisseur à pompe de charge (C1), qui est connecté par une première extrémité via une première diode (D4) à une tension auxiliaire (Vaux), et est en outre connecté par ladite première extrémité à la borne de grille du transistor de dérivation (T2),
dans lequel le convertisseur à pompe de charge est configuré pour générer une tension de commande, qui est supérieure à la tension de masse sur le condensateur PFC (C3) de la valeur de la tension auxiliaire (Vaux),
la tension de commande étant utilisée pour activer le transistor de pontage (T2), quand l'étage PFC est actif, de telle sorte que l'unité de limiteur résistif est pontée quand le circuit PFC est actif, et
pour désactiver le transistor de pontage (T2) quand le circuit PFC est inactif, ce qui désactive le pontage.

2. Circuit de correction de facteur de puissance selon la revendication 1, comprenant en outre un condensateur de masse (C3) connecté en série à ladite unité de limiteur (R3) .

3. Circuit de correction de facteur de puissance selon l'une des revendications 1 et 2, dans lequel ledit interrupteur semi-conducteur (T2) est un transistor de dérivation qui comprend un MOSFET d'alimentation, dans lequel
une borne de drain du MOSFET est connectée au premier nœud (110),
une borne de source du MOSFET est connectée au deuxième nœud (112), et
une borne de grille du MOSFET formant ladite borne de commande est connectée audit circuit de convertisseur à pompe de charge (C1, D3, D4).

4. Circuit de correction de facteur de puissance selon l'une des revendications 1 à 3, dans lequel un filtre passe-bas (C2, R2) est agencé entre ledit deuxième nœud (112) et ladite borne de grille, et/ou dans lequel une diode Zener (Z1) est connectée entre ladite borne de grille et ledit deuxième nœud (112), et/ou dans lequel une résistance de limitation de courant (R1) est agencée entre ladite borne de grille et ledit circuit de convertisseur à pompe de charge (C1, D3, D4).
